## Europäisches Patentamt

## European Patent Office

## Office européen des brevets

(19)

(11) Veröffentlichungsnummer : **0 012 238**
**B1**

(12) **EUROPÄISCHE PATENTSCHRIFT**

(45) Veröffentlichungstag der Patentschrift :
26.01.83

(21) Anmeldenummer : 79104552.9

(22) Anmeldetag : 16.11.79

(51) Int. Cl.³ : **H 04 B 3/44, H 04 B 3/46, H 04 B 9/00**

(54) **Schaltungsanordnung zum Schliessen der Fernspeiseschleife für reihengespeiste Zwischenverstärkerstellen.**

(30) Priorität : 06.12.78 DE 2852810

(43) Veröffentlichungstag der Anmeldung :
25.06.80 Patentblatt 80/13

(45) Bekanntmachung des Hinweises auf die Patenterteilung : 26.01.83 Patentblatt 83/04

(84) Benannte Vertragsstaaten :
AT BE CH DE FR GB IT NL SE

(56) Entgegenhaltungen :
DE B 1 902 090
DE B 2 318 226
DE C 1 267 267
DE C 1 762 599
GB A 1 135 716

(73) Patentinhaber : SIEMENS AKTIENGESELLSCHAFT
Berlin und München Wittelsbacherplatz 2
D-8000 München 2 (DE)

(72) Erfinder : Kraicar, Heinz, Dipl.-Ing.
Lindenberg 60a
D-8134 Pöcking (DE)
Erfinder : Ziegler, Alfred, Dipl.-Ing.
Laimer Platz 1
D-8000 München 21 (DE)

Jouve, 18, rue St-Denis, 75001 Paris, France

Schaltungsanordnung zum Schließen der Fernspeiseschleife für reihengespeiste Zwischenverstärkerstellen

Die Erfindung bezieht sich auf eine Schaltungsanordnung zum Schließen der Fernspeiseschleife für reihengespeiste Zwischenverstärkerstellen bei Streckenunterbrechungen unter Verwendung eines vom Fernspeisestrom durchflossenen Relais und einer in einem Querzweig liegenden Reihenschaltung, enthaltend einen Querwiderstand und einen Ruhekontakt des Relais, wobei der Querwiderstand zeitverzögert nach Schließen des Ruhekontaktes von einem ersten Widerstandswert auf einen demgegenüber kleineren zweiten Widerstandswert umsteuerbar ist.

Eine derartige Schaltungsanordnung ist bereits aus der DE-C-12 67 267 bekannt. Bei der bekannten Anordnung ist der Ruhekontakt des Relais so lange geöffnet, wie die Stromversorgungsschleife geschlossen ist. Tritt eine Unterbrechung der Stromversorgungsschleife auf, so fällt das Relais ab und der Ruhekontakt wird geschlossen. Da jedoch der in Serie zum Ruhekontakt liegende elektronische Schalter zunächst noch geöffnet ist, schalten. Erst dann, wenn der Relaiskontakt nach Ablauf der Prellzeit geschlossen ist, schaltet auch der elektonische Schalter durch. Der Relaiskontakt arbeitet daher beim Schließen des Querzweiges praktisch stromlos.

Aus der DE-C-17 62 599 ist ferner eine Schaltungsanordnung zum Schließen einer Fernspeiseschleife für reihengespeiste Unterstationen bei Streckenunterbrechungen bekannt. Dabei bestehen die unbesetzten Unterstationen jeweils aus je zwei parallel gespeisten Verstärkern für beide Richtungen. Zur Aufrechterhaltung der Speisung wenigstens in einem Teil des Übertragungssystems ist vorgesehen, daß in jeder Zwischenverstärkerstelle eine Relaisspule und die Verbraucherwiderstände der Verstärker in verschiedene Fernspeisestrompfade eingeschleift sind. Die Querverbindung mit dem Relaiskontakt ist über eine Weichenschaltung, bestehend aus je einer den Verbraucherwiderständen und der Relaisspule parallel geschalteten Reihenschaltung von wenigstens zwei Dioden hergestellt.

Durch diese Maßnahme soll in Fernspeisesystemen mit gleichmäßiger Lastverteilung die für eine Wiederaufschaltung erforderliche eindeutige Lage von Relaisspule und Querverbindung im Fernspeiseweg unabhängig davon erreicht werden, ob der Relaiszweig des Schaltzusatzes im einen oder anderen Fernspeisezweig angeordnet ist. Der Schaltzusatz ist ein Vierpol, der mit jeweils einem Klemmenpaar an den der Signalquelle zugewandten ersten und an den der Speisequelle abgewandten zweiten Teil der Fernspeiseschleife bzw. des Speiseadernpaares angeschlossen ist. Dadurch, daß die Relaisspule und damit der eine Längszweig des Vierpols von Zwischenverstärkerstelle zu Zwischenverstärkerstelle abwechselnd in den einen oder anderen Fernspeisestrompfad eingefügt ist und die Energieflußrichtung in der Fernspeiseschleife immer gleich ist, ergibt sich für den abwechselnd umgekehrt eingeschleiften Vierpol jeweils ein Wechsel der Energieflußrichtung.

Es wurde ferner bereits vorgeschlagen (EP-A1-7 626), die aus der DE-C-1 762 599 bekannte Schaltungsanordnung bei einer Anordnung zur Fernspeisung von Zwischenverstärkerstellen einer Einrichtung der Nachrichtenübertragungstechnik mittels Gleichstrom-Reihenspeisung zu verwenden, wobei in einem Fernspeisekreis eine Reihenschaltung von zwei in Speisestellen der Nachrichtenübertragungseinrichtung vorgesehenen, über ein Speiseadernpaar miteinander verbundenen Konstantstromquellen vorgesehen ist und wobei jede der beiden Konstantstromquellen derart bemessen ist, daß sie die ganze Übertragungsstrecke versorgen kann. Bei einer derartigen Verwendung ergibt sich, daß die Energieversorgung auch bei einer Unterbrechung an einer beliebigen Stelle des Fernspeisekreises weiter aufrecht erhalten bleibt, so daß keine Unterbrechung der Nachrichtenübertragung eintritt. Ferner ergibt sich der Vorteil, daß bei einer Unterbrechung der Fernspeiseschleife die Speiseadern jeweils selbsttätig in der Weise mit Hilfe eines Schaltzusatzes miteinander verbunden werden, daß der zugehörige Verstärker über die nichtunterbrochene Richtung weiter versorgt wird. Nach Beseitigung der Unterbrechung wird die Adernverbindung am Schaltzusatz selbsttätig wieder aufgehoben.

Unabhängig davon, ob der Fernspeisekreis von einer Speisestelle oder von zwei Speisestellen aus mit Konstantstrom versorgt wird, ergibt sich für den Fall, daß der Fernspeisekreis an irgendeiner Stelle unterbrochen wird, zunächst, daß alle Relais der Schaltzusätze abfallen und somit die Querzweige eingeschaltet werden. Im Falle einer beidseitigen Speisung des Fernspeisekreises wird die Speisung der Zwischenverstärkerstellen dadurch sofort wieder aufgenommen, daß zwei von den beiden Speisestellen ausgehende Speisekreise aufgebaut werden und zwar dadurch, daß in einem Schaltzusatz nach dem anderen das Relais anspricht und den Querzweig auftrennt. Bestehen bleiben dabei lediglich die beiden unmittelbar vor der Unterbrechungsstelle gelegenen Querzweige.

Weiterhin wurde bereits vorgeschlagen (EP-A1-7628), die aus der DE-C-1 762 599 bekannte Schaltungsanordnung bei einer Anordnung zur Fernspeisung von Zwischenstellen einer Einrichtung der Nachrichtenübertragungstechnik zu verwenden, bei der in einem Fernspeisekreis eine Reihenschaltung von zwei Konstantstromquellen vorgesehen ist und jede der beiden Konstantstromquellen die ganze Versorgungsstrecke versorgen kann. Dabei sind beide Konstantstromquellen auf verschiedene Stromwerte eingestellt, was für die Fehlermeldung bzw. -ortung besonders vorteilhaft ist.

Ferner ist aus der DE-B-2 318 226 eine anzugverzögerte Schalteinrichtung für Gleichspannungsanschluß bekannt, bei der in Serie zu einem Relais ein Widerstand liegt, der durch eine Überbrückungsschaltung kurzschließbar ist. Die Überbrückungsschaltung besteht aus einem programmierbaren Unijunction-Transistor, der durch ein RC-Glied gesteuert wird. Mit Hilfe dieser Schalteinrichtung läßt sich eine Anzugsverzögerung für das Relais erzielen.

Überlegungen im Rahmen der Erfindung haben ergeben, daß für bestimmte Anwendungsfälle für die Schaltungsanordnung bei der Dimensionierung des Widerstandes einander widersprechende Forderungen erfüllt sein müssen. Einerseits soll der Widerstand einen möglichst niedrigen Wert aufweisen, damit bei einer Streckenunterbrechung die zusätzliche Verlustwärme im Verstärkergehäuse gering bleibt und die Berührungsspannung an der Kabelbruchstelle in zulässigen Grenzen bleibt. Auch ein Aufschalten bzw. Ansprechen des Schaltzusatzes bei Berührung von freien Leitungsenden soll hierbei nicht möglich sein. Andererseits soll der Widerstandswert so hoch sein, daß jeder Schaltzusatz nach einer Streckenunterbrechung trotz der relativ hohen Eingangsspannung des folgenden Umrichters so rasch schaltet, daß die Betriebsspannung an den Umrichterausgängen während der Schaltzeit von wenigen ms nicht über die zulässige Toleranz hinaus absinkt. Das heißt, der Spannungsabfall am Widerstand soll innerhalb des Streckenteils vor der Unterbrechungsstelle viel größer als die Eingangsspannung des laufenden Umrichters sein, soll aber am letzten Schaltzusatz vor der Unterbrechungsstelle eine aus Gründen des Personenschutzes vorgegebene Maximalspannung nicht übersteigen.

Gleiche Gesichtspunkte gelten für den Fall eines nur einseitig gespeisten Fernspeisekreises dann, wenn der Fernspeisekreis nur kurzzeitig unterbrochen wird, so daß alle Relais abfallen und der Fernspeisekreis im Anschluß an die kurzzeitige Unterbrechung möglichst schnell wieder aufgebaut werden soll.

Aufgabe der Erfindung ist es daher, eine wie im Oberbegriff im Anspruch 1 angegebene Schaltungsanordnung derart auszubilden, daß im Anschluß an eine Unterbrechung des Fernspeisekreises und dadurch abgefallene Relais der Fernspeisekreis jeweils sicher und möglichst schnell wieder aufgebaut wird.

Gemäß der Erfindung wird die Schaltungsanordnung zur Lösung dieser Aufgabe derart ausgebildet, daß bei Zwischenverstärkerstellen, bei denen die an ihrem Speiseeingang vorhandene Spannung bei Unterbrechung der Fernspeisung zunächst weiter aufrecht erhalten bleibt, der erste Widerstandswert derart bemessen ist, daß bei einem angeschlossenen weiteren Verstärkerfeld der Spannungsabfall des über den Querwiderstand fließenden Fernspeisestrom-Anteiles höher ist, insbesondere der Ansprechempfindlichkeit des Relais angemessen höher ist, als die am Speiseeingang der Zwischenverstärkerstelle zunächst aufrecht erhaltene Gleichspannung.

Durch diese Maßnahmen ergibt sich der Vorteil, daß der Schaltzusatz die eingangs genannten, an sich einander widersprechenden Forderungen sicher erfüllt.

In weiterer Ausgestaltung der Erfindung enthält der Querwiderstand einen mittels einer Überbrückungsschaltung kurzschließbaren Teilwiderstand. Insbesondere enthält die Überbrückungsschaltung ihrerseits einen mittels eines RC-Gliedes steuerbaren Thyristor.

In Weiterbildung der Erfindung wird für die zum Personenschutz dienende Spannungsverringerung eine besonders hohe Sicherheit dadurch erreicht, daß dem Teilwiderstand zusätzlich zu einer elektronischen Überbrückungsschaltung ein mechanischer Thermoschalter parallelgeschaltet ist.

Die Erfindung wird anhand der in den Figuren dargestellten Ausführungsbeispiele näher erläutert.

Es zeigen :

Figur 1 eine Schaltungsanordnung zur unterbrechungslosen Fernspeisung von Zwischenstellen einer Nachrichtenübertragungseinrichtung,

Figur 2 und 3 Schaltzusätze, d.h. Schaltungen zum Schließen der Fernspeiseschleife bei Streckenunterbrechungen, und zwar Fig. 2 mit einem empfindlichen Relais,

Figur 4 den Querzweig eines Schaltzusatzes,

Figur 5 ein Spannungsdiagramm für einen Schaltzusatz, der einen Querzweig nach Fig. 4 enthält und

Figur 6 eine durch eine Zeitschaltung gesteuerte Überbrückungsschaltung.

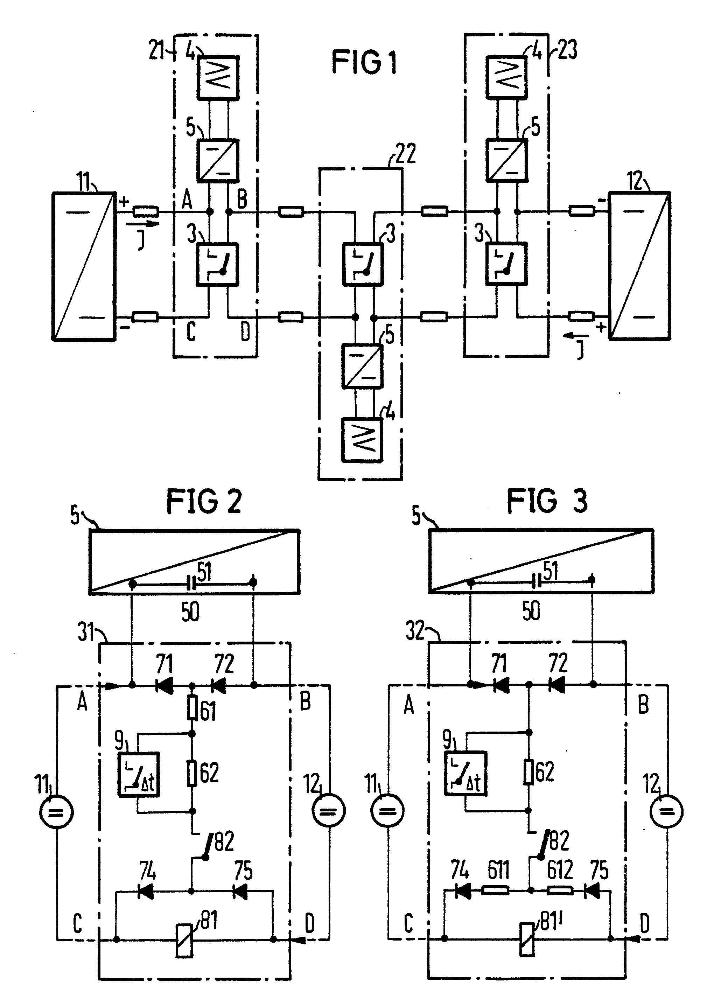

Fig. 1 zeigt eine Anordnung zur Fernspeisung von Zwischenstellen einer Einrichtung zur Nachrichtenübertragung, die insbesondere Zwischengeneratoren einer Lichtwellenleiter-Strecke sind.

Dabei läuft der Fernspeisekreis über Speiseadern, die zusätzlich zu den Lichtwellenleitern vorgesehen sind. Diese Speiseadern sind als nicht näher bezeichnete Widerstände dargestellt. Auch im Falle einer Nachrichtenübertragungsstrecke mit Koaxialleitungen, z.B. TF-Übertragungsstrecken, verläuft der Fernspeisekreis insbesondere über eigene Speiseadern im Beipack der Kabel. Dabei bleibt, sofern nur der Speisestromkreis unterbrochen ist, die Nachrichtenverbindung in vorteilhafter Weise weiter aufrechterhalten.

Die Zwischenstellen 21 ... 23 der Nachrichtenübertragungseinrichtung werden mittels Reihenspeisung mit konstantem Gleichstrom I gespeist. In jeder Zwischenstelle 21 ... 23, die eine Regenerator- oder Verstärkerstelle sein kann, ist ein Umrichter 5 zur Lieferung der Betriebsspannung für die Verbraucher vorgesehen, dessen Eingang vom Fernspeise-Gleichstrom I durchflossen ist. Der Umrichter 5 versorgt jeweils einen Leitungsverstärker 4, der je Übertragungsrichtung der Nachrichtenübertragungsstrecke einen Einzelverstärker enthält. Die beiden Einzelverstärker werden, was in der Figur nicht näher dargestellt ist, insbesondere parallel gespeist, so daß sich für die Schaltungsanordnung zur Fernspeisung eine Parallel-Reihenspeisung ergibt.

Die Umrichter 5 werden im Fernspeisekreis in Reihenschaltung betrieben. Die Eingänge der Umrichter 5 sind von Zwischenstelle zu Zwischenstelle alternierend in den einen und den anderen Fernspeise-Strompfad geschaltet, um eine gleichmäßige Lastverteilung zu erzielen. Sie können jedoch gegebenenfalls auch in ein und dieselbe Fernspeiseader bzw. ein und denselben Fernspeise-Strompfad eingefügt sein.

Das Fernspeise-Aderpaar ist an beiden Enden jeweils an eine Fernspeisegerät 11 bzw. 12 angeschlossen, so daß sich eine beidseitige Speisung mit gleichzeitig vorhandener Geräteredundanz ergibt. Dabei ist im Fernspeisekreis eine Reihenschaltung der beiden Fernspeisegeräte 11 und 12 wirksam. Jedes dieser beiden Fernspeisegeräte ist in der Lage, die ganze Fernspeisestrecke nach dem Prinzip der sogenannten « heißen Reserve » zu versorgen, so daß die Zwischenverstärkerstellen auch im Falle eines Fehlers an einem Fernspeisegerät oder auf der Strecke unterbrechungsfrei weiter in Betrieb bleiben.

Ist für die Fernspeisung keine Redundanz erforderlich, so kann an die Stelle eines der beiden Fernspeisegeräte eine unmittelbare Verbindung der Fernspeiseadern treten.

Sobald bei der in Fig. 1 gezeigten Schaltungsanordnung an irgendeiner Stelle eine Verbindung zwischen den Speiseadern auftritt, speist das Fernspeisegerät 11 bis zu dieser Stelle. Das Fernspeisegerät 12 speist ebenfalls bis zur Verbindungsstelle, so daß die gesamte Strecke weiterhin versorgt bleibt.

Ein unterbrechungsfreier Betrieb der Zwischenverstärkerstellen auch bei einer Unterbrechung des Fernspeise-Adernpaares wird dadurch erreicht, daß in jeder Zwischenstelle ein Schaltzusatz 3 vorgesehen ist, der bei einer Unterbrechung einer oder beider Speiseadern den Fernspeisekreis vor der Unterbrechungsstelle so schließt, daß die Umrichter 5 der Zwischenstellen weiter versorgt werden. Ein derartiger Schaltzusatz ist in den Figuren 2 und 3 näher dargestellt. Nach Beseitigung der Unterbrechung wird die Adernverbindung am Schaltzusatz selbsttätig wieder aufgehoben.

Figur 2 zeigt den Aufbau dieses Schaltzusatzes bei Verwendung eines empfindlichen Relais 81.

Der Schaltzusatz 31 wird auf der einen Seite mit den Anschlüssen A und C, auf der anderen Seite mit den Anschlüssen B und D in den Fernspeisekreis eingeschaltet. Die Anschlüsse A und B, an die der Umrichter 5 angeschlossen ist, sind über eine Serienschaltung aus den Dioden 71 und 72 verbunden. Zwischen den Anschlüssen C und D liegt das Relais 81, das durch die Serienschaltung der Dioden 74 und 75 überbrückt ist. Zwischen den Verbindungspunkten der beiden Dioden 71, 72 bzw. 74, 75 liegt eine Reihenschaltung, bestehend aus den Widerständen 61 und 62 und dem Ruhekontakt 82 des Relais 81. Ferner liegt parallel zum Widerstand 62 die Überbrückungsschaltung 9. Die Ansprechspannung des Relais 81 ist so gewählt, daß sie unter der Schwellenspannung der Dioden 74 und 75 liegt und daher ein Nebenschluß für die Relaisspule nicht auftritt.

Tritt die Streckenunterbrechung in Richtung der Anschlüsse B, D auf, so wird der Umrichter 5 aus der Richtung der Anschlüsse A bis C weiterbetrieben. Der Speisestrom fließt dann vom Anschluß A kommend über den Eingang des Umrichters 5 (Diode 71 sperrt), Diode 72 und Querwiderstand 61, 62 zum geschlossenen Relaiskontakt 82 und von dort über die Diode 74 und Anschluß C wieder zurück. Das Relais 81 überwacht die fehlerhafte Richtung der Anschlüsse B und D.

Tritt die Streckenunterbrechung in Richtung der Anschlüsse A bis C auf, so werden die Umrichter 5 aus der Richtung der Anschlüsse B bis D weiter betrieben. Der Stromfluß verläuft dann vom Anschluß D über die Diode 75, den Kontakt 82, den Widerstand 61, 62, die Diode 71, den Umrichter 5 zum Anschluß B. Das Relais 81 überwacht nun die fehlerhafte Richtung der Anschlüsse A bis C.

Fig. 3 zeigt eine Abwandlung des in Fig. 2 dargestellten Schaltzusatzes bei Einsatz eines weniger empfindlichen Relais 81'. Der Schaltzusatz nach Fig. 3 unterscheidet sich von dem nach Fig. 2 außerdem dadurch, daß anstelle des durch eine direkte Verbindung ersetzten Widerstandes 61 in Serie zu den Dioden 74 und 75 jeweils ein Widerstand 611 bzw. 612 angeordnet ist.

Die Diodenbrücke 71, 72, 74, 75 des in Fig. 2 bzw. Fig. 3 gezeiten Schaltzusatzes ermöglicht in vorteilhafter Weise die gleiche Arbeitsweise unabhängig von der Speiserichtung mit nur einem Relais 81 bzw. 81'.

Für Anwendungsfälle, bei denen ein Wechsel der Energieflußrichtung nicht vorkommt, können die Dioden 71 bis 75 entfallen, derart, daß z.B. für eine Energieflußrichtung von AC nach BD die Dioden 72 und 74 durch einen Kurzschluß ersetzt und die Dioden 71 und 75 weggelassen werden.

Bei den Schaltzusätzen nach Fig. 2 bzw. Fig. 3 wird der Widerstand des Querzweiges, bestehend aus den Widerständen 61 und 62 bzw. 62 und 611 oder 62 und 612 so groß gewählt, daß das Arbeiten der Schaltzusätze 31 bei laufenden Umrichtern 5 gewährleistet ist, d.h. in dem Fall, daß im Anschluß an eine kurzzeitige Unterbrechung der Fernspeiseschleife an den Speiseeingängen der Umrichter 5 noch eine relativ hohe Eingangsspannung anliegt. Die weitere Aufrechterhaltung der Umrichter-Eingangsspannung kann insbesondere durch jeweils am Eingang wirksame Kondensatoren oder Diodenspulen mit Freilaufdiode bedingt sein und dazu dienen, kurzzeitige Unterbrechungen der Fernspeisung zu überbrücken. Als Freilaufdioden können dabei die Dioden 71, 72 der Brückenschaltung dienen.

Ferner ist eine Schaltung 9 vorgesehen, welche nach einer definierten Zeit Δt einen so großen Teil des im Querzweig gelegenen Widerstandes kurzschließt, daß der verbleibende Spannungsabfall den Anforderungen hinsichtlich Berührungsschutz und Wärmeentwicklung entspricht. Insbesondere hält man die Verzögerungszeit Δt, die bis zur Durchführung der Widerstandreduktion verstreicht, so kurz, daß nur während einer Zeit, die mit Sicherheit die Schaltvorgänge auf der Strecke umfaßt der hohe, erste Widerstandswert vorhanden ist. Die Schaltvorgänge können insbesondere in der Größenordnung von $10^1$ Millisekunden und die entsprechende Verzögerungszeit etwa in der Größenordnung von $10^2$ msec liegen. Dadurch ist in vorteilhafter Weise an der Bruchstelle des Kabels der Berührungsschutz in der Praxis immer gewährleistet, da während der notwendigen Zeit vom mechanischen Zerreißen bis zum Freistehen der Aderenden eine Berührung durch Personen praktisch nicht möglich ist.

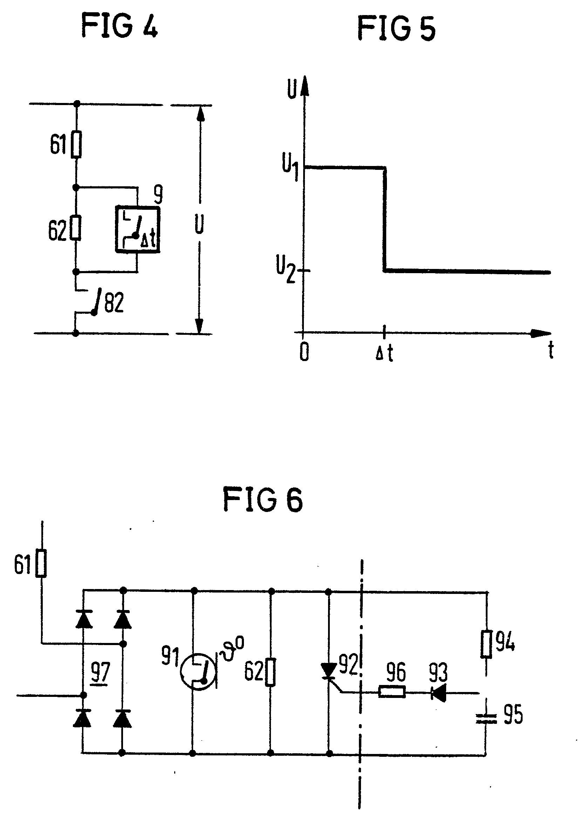

Fig. 4 zeigt den Querzweig eines Schaltzusatzes. Der zugehörige Spannungs-Zeit-Verlauf ist in Fig. 5 dargestellt.

Fig. 6 zeigt ein Ausführungsbeispiel für eine verzögerte Überbrückungsschaltung. Der Widerstand 62 ist einerseits durch die Anoden-Kathoden-Strecke des Thyristors 92 und andererseits durch den Thermoschalter 91 überbrückt. Zur Ansteuerung des Thyristors 92 dient die aus dem Widerstand 94 und dem Kondensator 95 bestehende, ebenfalls an den Widerstand 62 angeschlossene Serienschaltung. Der Verbindungspunkt des Widerstandes 94 mit dem Kondensator 95 ist über die Vierschichtdiode 93 und den Widerstand 96 an die Steuerelektrode des Thyristors 92 geführt, so daß der Kondensator 95 über die Vierschichtdiode 93 bzw. den Diac 93 zwischen Steuerelektrode und Kathode des Thyristors 92 liegt.

Der Widerstand 62 ist an die Dioden-Brückenschaltung 97 angeschlossen, deren anderes Anschlußpaar in Serie zum Widerstand 61 im Querzweig des in dieser Figur nicht näher dargestellten Schaltzusatzes gelegen ist.

Anstelle der Diodenbrücke mit Thyristor kann z.B. ein entsprechend beschalteter Triac Verwendung finden.

Die in Fig. 6 gezeigte Schaltungsanordnung dient zur elektronischen Kurzzeit-Überbrückung und benötigt keine fremde Stromversorgung. Sie ist nach Betätigung des Relaiskontaktes 82 — bei intakter Strecke — sofort wieder betriebsbereit. Da sie auch während der normalen Betriebszeit der Strecke stromlos bleibt, ist ihre Ausfallrate außerordentlich gering. Trotzdem ist parallel hierzu zusätzlich ein Thermoschalter 91 angeordnet, der bei Ausfall der Schaltung durch die Erwärmung des Widerstandes zum Ansprechen kommt. Damit wird für die zum Personenschutz notwendige Spannungsverringerung eine besonders hohe Sicherheit erreicht.

Die Widerstandsumschaltung im Querzweig bietet für die Dimensionierung des Schaltzusatzes den Vorteil, daß man nicht mehr Kompromißlösungen suchen muß, die strenge und schwer realisierbare Anforderungen an die Toleranzen des Relais stellen ; statt dessen lassen sich sowohl für das Weiterschalten innerhalb der Strecke als auch für den Schleifenschluß vor der Unterbrechungsstelle die günstigsten Widerstandswerte frei wählen.

## Ansprüche

1. Schaltungsanordnung zum Schließen der Fernspeiseschleife für reihengespeiste Zwischenverstärkerstellen (21 ... 23) bei Streckenunterbrechungen unter Verwendung eines vom Fernspeisestrom (I) durchflossenen Relais (81) und einer in einem Querzweig liegenden Reihenschaltung, enthaltend einen Querwiderstand (61, 62 ; 611, 612, 62) und einen Ruhekontakt (82) des Relais (81), wobei der Querwiderstand (61, 62 ; 611, 612, 62) zeitverzögert nach Schließen des Ruhekontaktes (82) von einem ersten Widerstandswert auf einen demgegenüber kleineren zweiten Widerstandswert umsteuerbar ist, dadurch gekennzeichnet, daß bei Zwischenverstärkerstellen (21 ... 23), bei denen die an ihrem Speiseeingang vorhandene Spannung bei Unterbrechung der Fernspeisung zunächst weiter aufrecht erhalten bleibt, der erste Widerstandswert derart bemessen ist, daß bei einem angeschlossenen weiteren Verstärkerfeld der Spannungsabfall des über den Querwiderstand (61, 62 ; 611, 612, 62) fließenden Fernspeisestrom-Anteiles höher ist, insbesondere der Ansprechempfindlichkeit des Relais (81) angemessen höher ist, als die am Speiseeingang der Zwischenverstärkerstelle (21 ... 23) zunächst aufrecht erhaltene Gleichspannung.

2. Schaltungsanordnung nach Anspruch 1, dadurch gekennzeichnet, daß der Querwiderstand (61, 62 ; 611, 612, 62) einen mittels einer Überbrückungsschaltung (9) kurzschließbaren Teilwiderstand (62) enthält.

3. Schaltungsanordnung nach einem der Ansprüche 1 oder 2, dadurch gekennzeichnet, daß die Überbrückungsschaltung (9) einen mittels eines RC-Gliedes (94, 95) steuerbaren Thyristor (92) enthält.

4. Schaltungsanordnung nach einem der Ansprüche 2 oder 3, dadurch gekennzeichnet, daß dem Teilwiderstand (62) zusätzlich zu einer elektronischen Überbrückungsschaltung (9) ein mechanischer Thermoschalter (91) parallelgeschaltet ist.

5. Schaltungsanordnung nach einem der Ansprüche 1 bis 4, dadurch gekennzeichnet, daß der zweite Widerstandswert derart klein bemessen ist, daß das Produkt aus Speisegleichstrom (J) und zweitem Widerstandswert kleiner als eine im Hinblick auf den Personenschutz vorgegebene Maximalspannung ist.

## Claims

1. A circuit arrangement for closing the remote feeding loop for series-fed intermediate amplifier stations (21 ... 23) in the event of section interruptions, employing a relay (81) through which remote supply current (I) flows, a series connection arranged in a shunt arm and comprising a shunt resistance (61, 62 ; 611, 612, 62) and a rest contact (82) of the relay (81), the shunt resistance (61, 62 ; 611, 612, 62) being capable of being changed over with a time delay when the rest contact (82) is closed from a first resistance value to a second resistance value smaller than the first, characterised in that in intermediate amplifier stations (21 ... 23), in which the voltage occurring at its feed input in the event of an interruption in the remote supply is initially maintained, the first resistance value is so dimensioned that in a further connected amplifier field the voltage drop of the portion of the remote supply current which flows via the shunt resistance (61, 62 ; 611, 612, 62) is higher, in particular higher in due proportion to the sensitivity of response of the relay (81), than the direct voltage which is initially maintained at the supply input of the intermediate amplifier station (21 ... 23).

2. A circuit arrangement as claimed in Claim 1, characterised in that the shunt resistance (61, 62 ; 611, 612, 62) comprises a resistor element (62) which can be short-circuited by a bridging circuit (9).

3. A circuit arrangement as claimed in one of Claims 1 or 2, characterised in that the bridging circuit (9) comprises a thyristor (92) controllable by an RC-element (94, 95).

4. A circuit arrangement as claimed in one of Claims 2 or 3, characterised in that in addition to an electronic bridging circuit (9) a mechanical thermo-switch (91) is connected in parallel to the resistor element (62).

5. A circuit arrangement as claimed in one of Claims 1 to 4, characterised in that the second resistance value is dimensioned to be so small that the product from the supply direct current (J) and the second resistance value is smaller than a maximum voltage specified for the protection of personnel.

## Revendications

1. Montage pour fermer la boucle de téléalimentation pour stations de répéteurs intermédiaires (21 ... 23) alimentées en série dans le cas d'interruptions de lignes, avec mise en œuvre d'un relais (81) traversé par le courant de téléalimentation (I) et d'un circuit série monté dans une branche transversale comportant une résistance transversale (61, 62 ; 611, 612, 62) et un contact de repos (82) du relais (81), la résistance transversale (61, 62 ; 611, 612, 62) pouvant, avec un retard dans le temps, être commutée après fermeture du contact de repos (82) d'une première valeur ohmique à une seconde valeur ohmique plus faible que la première, caractérisé par le fait que dans les stations de répéteurs intermédiaires (21 ... 23) dans lesquelles la tension qui est présente à leurs entrées d'alimentation continue d'abord à être maintenue lors de l'interruption de la téléalimentation, la première valeur ohmique est dimensionnée de telle manière que pour une autre section d'amplification qui est branchée, la chute de tension du courant de téléalimentation qui passe par la résistance transversale (61, 62 ; 611, 612, 62) est plus élevée, plus particulièrement la sensibilité de réponse du relais (81) est notablement supérieure à la tension continue qui est d'abord maintenue à l'entrée de la station de répéteurs intermédiaire (21 ... 23).

2. Montage selon la revendication 1, caractérisé par le fait que la résistance transversale (61, 62 ; 611, 612, 62) comporte une résistance partielle (62) qui est susceptible d'être court-circuitée par un circuit shunt (9).

3. Montage selon l'une des revendications 1 ou 2, caractérisé par le fait que le circuit shunt (9) comporte un thyristor (92) qui est susceptible d'être commandé par un circuit RC (94, 95).

4. Montage selon l'une des revendications 2 ou 3, caractérisé par le fait qu'en parallèle sur la résistance partielle (62) est monté, en plus d'un circuit shunt électronique (9), un interrupteur thermique mécanique (91).

5. Montage selon l'une des revendications 1 à 4, caractérisé par le fait que la seconde valeur ohmique est dimensionnée à une valeur faible telle que le produit du courant continu d'alimentation (J) et de la seconde valeur ohmique est inférieure à une tension maximale donnée à l'avance pour assurer la protection des personnes.

FIG 1

FIG 2

FIG 3

FIG 4

FIG 5

61

62

9
Δt

82

U

U
U₁
U₂

0    Δt    t

FIG 6

61

97

91 ϑ°

62

92

96   93

94

95